(19) Europäisches Patentamt
European Patent Office
Office européen des brevets

(11) **EP 2 922 280 A1**

(12) **EUROPEAN PATENT APPLICATION**

(43) Date of publication:
**23.09.2015 Bulletin 2015/39**

(51) Int Cl.:
***H04L 29/12*** *(2006.01)*

(21) Application number: **15159846.3**

(22) Date of filing: **19.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.03.2014 IN CH14582014**
**20.05.2014 US 201414282529**

(71) Applicant: **Verisign, Inc.**
**Reston, VA 20190 (US)**

(72) Inventors:
- **Borges, Alkan**
**RESTON, VA, 20190 (US)**
- **Dhasarathan, Udhayashankar**
**RESTON, VA, 20190 (US)**
- **Gupta, Ankur**
**RESTON, VA, 20190 (US)**
- **Manickam, Ramesh**
**RESTON, VA, 20190 (US)**

(74) Representative: **Fontenelle, Sandrine et al**
**Cabinet Beau de Loménie**
**158, rue de l'Université**
**75340 Paris Cedex 07 (FR)**

(54) **N-gram combination determination based on pronounceability**

(57) Alternative keyword inputs may be generated based on an input keyword input (310). Multiple n-grams may be determined from the input keyword input (320). Combinations of n-grams may be generated (330). Pronounceability of the combinations may be determined (340). Combinations of n-grams with pronounceability that exceed a predetermined threshold may be provided (350).

FIG. 3

## Description

Background

The Internet enables a user of a client computer system to identify and communicate with millions of other computer systems located around the world. A client computer system may identify each of these other computer systems using a unique numeric identifier for that computer called an Internet Protocol ("IP") address. When a communication is sent from a client computer system to a destination computer system, the client computer system may specify the IP address of the destination computer system in order to facilitate the routing of the communication to the destination computer system. For example, when a request for a website is sent from a browser to a web server over the Internet, the browser may ultimately address the request to the IP address of the server. IP addresses may be a series of numbers separated by periods and may be hard for users to remember.

The Domain Name System (DNS) has been developed to make it easier for users to remember the addresses of computers on the Internet. DNS resolves a unique alphanumeric domain name that is associated with a destination computer into the IP address for that computer. Thus, a user who wants to visit the Verisign website need only remember the domain name "versign.com" rather than having to remember the Verisign web server IP address, such as 65.205.249.60.

A new domain name may be registered by a user through a domain name registrar. The user may submit to the registrar a request that specifies the desired domain name. The registrar may consult a central registry that maintains an authoritative database of registered domain names to determine if a domain name requested by a user is available for registration, or if it has been registered by another. If the domain name has not been registered, the registrar may indicate to the user that the requested domain is available for registration. The user may submit registration information and a registration request to the registrar, which may cause the domain to be registered for the user at the registry. If the domain is already registered, the registrar may inform the user that the domain is not available.

Many domain names have already been registered and are no longer available. Thus, a user may have to submit several domain name registration requests before finding a domain name that is available. There may be suitable alternative domain names that are unregistered and available, although a user may be unaware that they exist.

BRIEF DESCRIPTION OF THE DRAWINGS

The accompanying drawings, which are incorporated in and constitute a part of this specification, illustrate several examples and together with the description, serve to explain the principles of the disclosed examples. In the drawings:

FIG. 1 is a diagram illustrating an example overall keyword input and alternative suggestion generation system, in accordance with one or more examples disclosed herein;
FIG. 2 is a diagram illustrating an example alternatives generator, in accordance with one or more examples disclosed herein;
FIG. 3 is a flow diagram of a process for providing alternative keywords, in accordance with one or more examples disclosed herein;
FIG. 4 is a flow diagram of a process for providing alternative keywords, in accordance with one or more examples disclosed herein;
FIG. 5 is an example user interface, in accordance with one or more examples disclosed herein; and
FIG. 6 is an example user interface, in accordance with one or more examples disclosed herein.
FIG. 7 is an example block diagram of a device including an alternative generator, in accordance with one or more examples disclosed herein.

DETAILED DESCRIPTION

As discussed herein, alternative keywords and/or alternative suggestions to a keyword input may be generated by decomposing the keyword input into a set of n-grams. A set of combinations of n-grams may be generated, where each combination in the set includes two or more n-grams from the set of generated n-grams. Each of the combinations of n-grams in the set may be evaluated to determine whether the combination of n-grams exceeds a predetermined threshold of pronounceability. Those combinations that exceed the predetermined threshold of pronounceability may be provided. Pronounceability may be an indicator of how easy it is to pronounce a combination.

It may be appreciated that an n-gram may be a contiguous sequence of items including characters, letters, graphemes, phonemes, syllables, words, etc., that are generated from the keyword input. "n" represents an integer value of 1 to x, where x is the maximum number of items in each of the n-grams. When n=1, the n-gram may be referred to as a unigram; when n=2, the n-gram may be referred to as a bigram; when n=3, the n-gram may be referred to a trigram, etc.

In accordance with certain examples, a user may be provided with one or more alternative suggestions to a keyword input that were selected based on the pronounceability of the combination of n-grams that is desired by the user or based on a term or phrase provided by the user. For example, alternative suggestions may be provided when a keyword input desired by the user is unavailable for registration as a domain name or other unique identifier, such as where it has already been registered. A user may be a registrar, a registry, a natural person seeking to register a keyword input as a domain name or other unique identifier, an automated process, or any other suitable entity. Alternatively, alternative suggestions may be provided where a user is considering what keyword input should be registered.

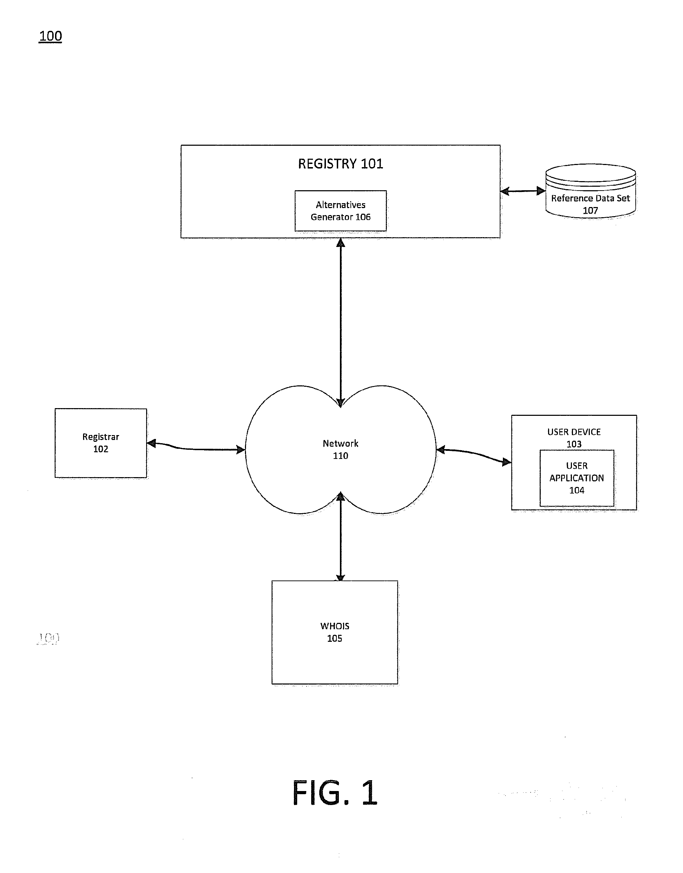

A system 100 according to one or more examples is shown in FIG. 1. System 100 may include a domain name registry 101 including an alternatives generator 106, a domain name registrar 102, a user device 103 including a user application 104, and a whois database 105 communicatively connected via a network 110. Registry 101 may be implemented as a server, mainframe computing device, any combination of these components, or any other appropriate computing device, resource service, for example, cloud, etc. Registry 101 may be a standalone device, or may be part of subsystem, which, in turn, may be part of a larger system. While registry 101 may be described as including various components, one or more of the components described may be located at other devices, shown or not shown in the figures herein, within system environment 100. Registry 101 may further be communicably linked to reference data set 107. Network 110 may include one or more direct communication links, local area networks (LANs), wide area networks (WANs), or any other suitable connections. Network 115 may also include the Internet.

Alternatives generator 106 may be one or more applications implemented on a device including one or more processors (not shown) coupled to memory (not shown) to provide a list of alternative suggestions based on keyword input. The processors may include, e.g., a general purpose microprocessor such as the Pentium processor manufactured by Intel Corporation of Santa Clara, Calif.; an application specific integrated circuit that embodies at least part of the method in accordance with certain examples in its hardware and firmware; a mobile device processor, a combination thereof; etc. The memory may be any device capable of storing electronic information, such as RAM, flash memory, a hard disk, an internal or external database, etc. The memory can store instructions adapted to be executed by the processor to perform at least part of the method in accordance with certain embodiments. For example, the memory can store computer software instructions, for example, computer-readable or machine-readable instructions, adapted to be executed on the processor to receive keyword input and generate and output alternative suggestions in addition to other functionality discussed herein.

In the example shown in FIG. 1, alternatives generator 106 is provided by registry 101. In other examples, the alternatives generator 106 may be provided by the registrar 102 or a third party. In still other examples, alternatives generator 106 may be located on user device 103 or may be stored on another server or computer (not shown) connected to network 110.

In the example shown in FIG. 1, reference data set 107 is located at registry 101. It other examples, reference data set 107 may be located within registry 101 or remote from registry 101. Still further, reference data set 107 may be located at other areas within system environment 100.

User device 103 may be a laptop or desktop computer, a smartphone, a tablet or any other suitable device. User application 104 may include a software application that executes on user device 103 and may be controlled by a user, such as a natural person seeking to generate alternative suggestions to keyword input, or to register or check the availability of a keyword input, and/or alternative suggestions, as a domain name or other unique identifier. The user may provide keyword input, which may include, e.g., a requested domain name, a term, phrase, one or more keywords, etc., at user device 103. The keyword input may be a word that may be found in a dictionary, or may be a word that is not found in a dictionary, i.e., a string of characters that do not represent a word found in a dictionary. User application 104 may send a message including keyword input, based on the user input to, for example, registrar 102. For example, the message may request registrar 102 to generate, register or check the availability of a requested keyword input for registration or may request registrar 102 to suggest one or more alternative suggestions to the keyword input. In some examples, registrar 102 may send a query to whois database 105 or registry 101 to determine if a requested keyword input is already registered as a domain name. Based on the keyword input, and/or if it is determined that the requested keyword input is unavailable to register as a domain name, alternatives generator 106 may generate alternative suggestions, query the whois database 105 or registry 101 to determine which of the generated alternative suggestions are available for registration, and send the alternative suggestions that are available to user application 104 or any other suitable destination. In some examples, alternative suggestions may be generated prior to checking whether a domain is available for registration.

It may be appreciated that input to the alternatives generator 106 may be accessed from other sources within system environment 100, for example, a storage device at registry 101 (not shown), a storage device at registrar 102 (not shown), etc.

In certain examples, alternatives generator 106 may generate alternative suggestions based on n-grams that are generated from keyword input that is provided. As discussed herein, a keyword input may be implemented as a domain name, a term, a phrase, one or more keywords, etc. that may be input to the alternatives generator 106. For example, the keyword input may include a single word, multiple words, etc., and may be parsed in order to generate n-grams. The n-grams may be bigrams, trigrams, etc. The determination of the value of "n" may be set, for example, via an administrator, via a user at registrar 102, via the user at user device 103 through user application 104, set by default, etc. The number of n-grams that may be generated may be exhaustive of all available n-grams based on the input, or may be a subset of all available n-grams. The determination of the number of n-grams that may be generated may be set, for example, via an administrator, via a user at registrar 102, via the user at user device 103 through user application 104, set by default, etc.

Based on the generated n-grams, alternative suggestions may be generated. The alternative suggestions may be in the form of a combination of, or concatenation of, multiple n-grams that were generated from the keyword input. The alternative suggestions may be generated based on one or more algorithms, for example, providing all combinations or permutations of all generated n-grams, for each combination, selecting one n-gram from each word, selecting combinations that are less than a maximum length, selecting combinations that are greater than a minimum length, etc.

In accordance with some examples as discussed herein, in generating possible alternative suggestions, each input keyword is traversed to generate all possible combinations of characters in the input keyword. Each of the generated combinations may be considered an n-gram. The n-grams may be concatenated together to generate all possible combinations of the generated n-grams.

According to some examples, n-grams of different lengths may be concatenated. For example, a bigram from the keyword input can be combined with a trigram or quadgram from the keyword input or from a synonym or related words of the keyword input.

The set of strings, or the set of concatenated n-grams, generated via the concatenation process, maybe called the first generation string pool. Multiple strings from the first generation string pool may be selected based on one or more criteria, for example, selected randomly, selected based on length, selected based on the number of trigrams, etc., and treated as new keyword input. The above steps are repeated on the new keyword input in order to generate all possible n-grams of the keyword inputs and all possible combinations of the generated n-grams. The number of iterations that may be performed may be configurable and may be sought as another keyword input. The set of strings generated after all of the iterations have been completed may be considered as a complete set of alternative suggestions to the keyword input.

For example, where the input keywords are "Soccer", "sports, and "team", The following are examples of combinations of n-grams generated based on the input keywords:

Sporccerteam
Teamsporccer
Teamsporccers

Once the set of combinations are generated, each of the combinations is analyzed to determine a pronounceability of the combination. This may be achieved by applying one or more algorithms to the combination. For example, a reference data set 107 may be accessed and searched to determine a frequency of occurrence for each of the n-grams included in the combination. The reference data set 107 may be implemented as one or more of a language dictionary, a dictionary of technical terms, an article, a book, or any other defined reference data set 107. The reference data set may be defined via the user interface by a user. The pronounceabilty may be gauged by comparing the frequency of occurrence of the same constituent n-grams as they appear in words contained in the reference data set 107. Constituent n-grams (and therefore their combination) which appear more frequently may be assumed to more closely resemble existing words, and therefore more pronounceable or familiar to the user.

As the reference data set is identified by a user, and is not limited to a default reference data set, it may be appreciated that the principles discussed herein are not limited to a particular language, but may be applied to any language, and further may be applied to multiple languages.

According to some examples, since the pronounceability value is subjective to the vocabulary of a field or category, the reference data set could be a non-dictionary reference, for example a zone file of domain names, a subset thereof, or any other set of data. The reference data set may further, according to some examples, have regional connotations since the pronunciations would change geographically as well. Thus, the pronounceability score may change depending on the reference data set that is selected.

The factors contributing to the pronounceability value :

- Frequency of Matching Trigrams occurring in the reference dataset
- Sound tags/Similarity with reference dataset -Count of matching double metaphone tags in the reference dataset
- Extent of Subsegment match between alternate suggestion and the input keyword ( Extent of input coinciding with generated alternative suggestion)

The following is an example formula that may be used to calculate the pronounceability value:

$$StartBiGramFreq*(a0.trigramFrequency+a1.soundTagFrequency+a2.substringMatch)$$

where:

$$a0= (mean (allTrigramFreq) - trigramFreq)/(stddev(allTrigramFreq) * no of triGrams in the alternative) ;$$

$$a1= mean(allSoundTagFreq) - trigramFreq/(stddev(allSoundTagFreq));$$

$$a2=(len(substr(suggestion,input1))/len(input1)+len(substr(suggestion,input2))/len(input2))$$
$$/len(suggestion)$$

where:

StartBiGramFreq = the frequency the starting bigram appears in the reference data set;
TrigramFrequency = the frequency the trigram appears in the reference data set;
AllTrigramfreq = the frequency all of the trigrams appear in the reference data set;
Stddev = standard deviation;
No of triGrams in the alternative = the number of trigrams in the alternative; allSoundTagFreq = the frequency of all of the sound tags in the reference data set; and
len (substring) = the length of the substring.

Thus, as can be seen from the above formula, two aspects are considered with respect to the pronounceability value, the pronounceability of, in this example, the trigrams within each combination, and the pronounceability of the starting bigram in within each combination.

Once pronounceability of each of the generated combinations is determined, the alternatives generator 106 may compare the pronounceability of each of the combinations with a predetermined threshold value of pronounceability. The predetermined threshold value of pronounceability may be set, for example, via an administrator, via a user at registrar 102, via the user at user device 103 through user application 104, set by default, etc.

In some examples, combinations may not be generated that exceed a maximum length and/or that are less than a minimum length. The maximum length value and minimum length value may be set, for example, via an administrator, via a user at registrar 102, via the user at user device 103 through user application 104, set by default, etc. This provides for the ability to generate alternative suggestions that are shorter, or include a lesser number of characters than the keyword input by the user.

Those combinations that exceed the predetermined threshold of pronounceability may be provided, for example, to storage, to user application 104, to registrar 102, to a display at registry 101, etc. In some examples, the combinations that exceed the predetermined threshold of pronounceability may be scored to provide a strength ranking. The strength ranking may be an indicator of how strong the alternative keyword input is to a user. The strength ranking may be based on one or more ranking criteria that may be set, for example, via an administrator, via a user at registrar 102, via the user at user device 103 through user application 104, set by default, etc. The strength ranking may be based on, for example, one or more of the following: phonetic closeness of the combination to the keyword input, the length of the combination, similarity of the combination to unrelated keyword inputs, the pronounceability score, whether the alternative begins with a bigram, a correlation of n-grams within a single word, etc.

The strength ranking may be provided, together with the combinations, for example, to storage, to user application 104, to registrar 102, to a display at registry 101, etc.

In some examples, certain combinations may be excluded from the set of combinations that may be published, even though they may exceed the predetermined threshold of pronounceability. For example, if the combination is an existing word in the reference data set 107, the combination may be excluded; if the combination is an ordinary grammatical arrangement of n-grams, the combination may be excluded, etc. These rules may be set by default or may be configured by a user at user device 103, registrar 102, registry 101, etc.

According to some examples, multiple data sets may be used to determine whether a combination may be excluded from the list of alternative suggestions. For example, one or more dictionaries, one or more zone files including registration information for domain names, the reference data set, and/or any other data set, may be used to determine whether a combination should be excluded from the list of alternative suggestions.

According to some examples, combinations that exactly match with words in reference and language datasets will be excluded from the list of alternative suggestions as they may be considered as obvious. In other words, the combinations that are included in the list of alternative suggestions may not be found in the dictionary or reference data sets.

According to some examples, combinations that do not begin with a bigram may be excluded from the set of alternative suggestions.

According to some examples, those alternative suggestions that do not start with a bigram may have the strength raking lowered so that they rank lower than other alternative suggestions that do start with a bigram.

In some examples, the combinations that exceed the predetermined threshold of pronounceability may be checked to determine if the combinations are currently registered domain names. If they are currently registered domain names, they may be removed as alternative suggestions and not provided.

In some examples, the alternative suggestions, in the form of combinations of n-grams, may be combined with a Top Level Domain (.com, .net, .tv, .us, etc.) to generate an alternative domain name and may be provided in a user interface that may permit selection of one or more combinations for registration with, for example, registrar 102, registry 101, etc.

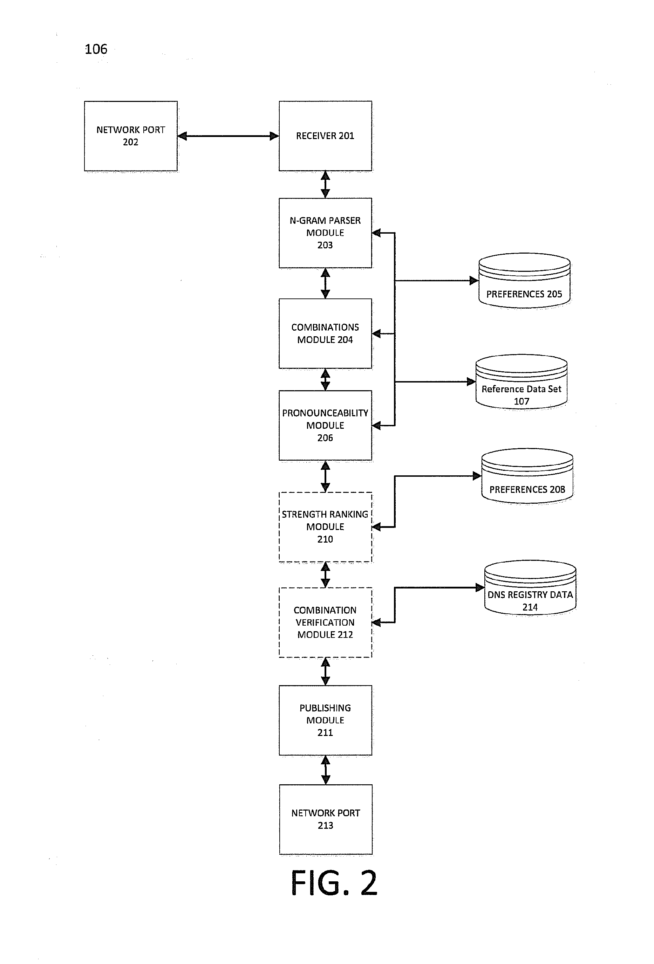

FIG. 2 shows an example block diagram of alternatives generator 106 consistent with disclosed examples. In alternatives generator 106, a receiver 201 may receive keyword input through a network port 202, and may send it to n-gram parser module 203. Keyword input may include e.g., a single word, or may include multiple keywords. In some examples, in addition to the keyword input entered by a user, an additional step may occur where the synonym of the keyword input by the user may be added to the keyword input. Thus, both the keyword input by the user, and the synonym of the keyword input may be considered as keyword input and utilized to generate the n-grams and combinations of n-grams as discussed herein.

Keyword input may also include e.g., a compound word or phrase made of more than one word. In other examples the input may be received from other sources, for example, a storage (not shown in system environment 100), registrar, etc.

N-gram parser module 203 may be in communication with preferences storage 205 and assess preferences, for example, from storage 205. Preferences may include the integer value of n thereby indicating the length of each n-gram.

N-gram parser module 203 may decompose the keyword input by parsing the keyword input into multiple n-grams and send the parsed results to a combination module 204. Combination module 204 may be in communication with preferences storage 205 and may generate alternative keywords or suggestions in the form of combinations of n-grams generated by n-gram parser module 203. In some examples, the alternative keywords or suggestions may be generated based on preferences stored in preferences storage 205. The results of combination module 204 may be passed to pronounceability module 206.

Pronounceability module 206 may determine a pronounceability of each of the combinations generated by the combination module 204. The pronounceability of each of the combinations may be determined, as discussed herein, based on reference data set 207. The pronounceability of each of the combinations may be compared with a predetermined threshold pronounceability value. The predetermined pronounceability threshold may be accessed, for example, at preferences storage 205. Those combinations that exceed the predetermined pronounceability threshold are passed to either the strength ranking module 210 according to some examples, or to publishing module 211. In some examples, the combinations that exceed the predetermined threshold pronounceability may be sent to publisher 211, which may send them to the user, registrar, or a third party through a network port 213.

In some examples, combinations that exceed the predetermined threshold pronounceability may be input to strength ranking module 210. Strength ranking module 210 may access preferences from preferences 208 and utilizes those preferences, as discussed herein, to generate a strength ranking of each of the combinations that exceed the predetermined threshold of pronounceability. The generated strength ranking may be associated with the respective combination and provided to publishing module 211 for publication as alternative suggestions.

In some examples, the combinations that are passed to the publishing module may be alternative keyword inputs that may be input to alternatives generator in order to generate alternative suggestions.

In some examples, those combinations that exceed a predetermined threshold of pronounceability may be input to combination verification module 212. Combination verification module 212 may access domain name registration data to determine if each of the combinations is available for registration. Domain name registration data may be accessed at storage 214. If one or more of the combinations are already registered, they may be removed from the set of combinations that are passed to publisher 211. In some examples, even if the combination is not available for registration, the combination may still be published with an indication that the combination is not available for registration.

While FIG. 2 shows preference storage 205, reference data set 207, preferences 208, and DNS registry data 214 included in alternatives generator 106, these databases may be stored separately and accessed remotely by alternatives generator 106. For example, alternatives generator 106 may access one or more of the databases via network 110, as shown in FIG. 1.

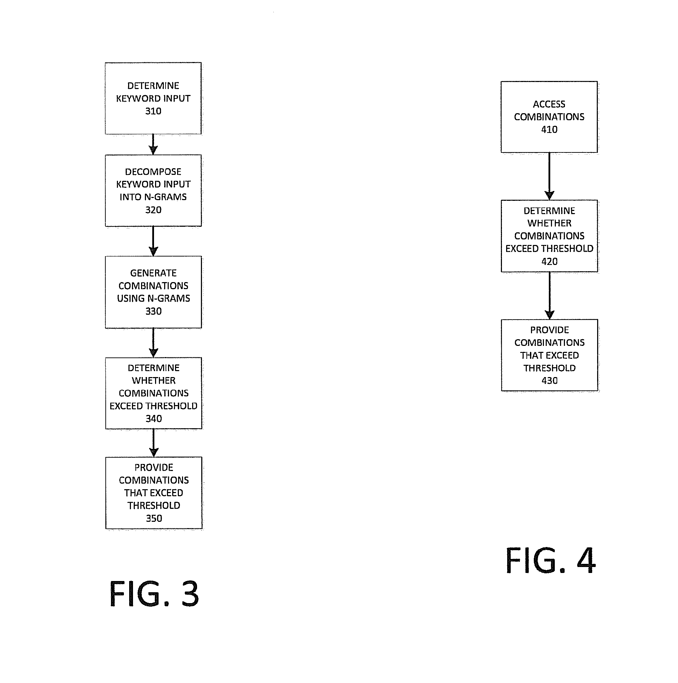

FIG. 3 is an example flow diagram of a process 300 for providing determined combinations that exceed a predetermined threshold of pronounceability, in accordance with some examples herein. Alternatives generator 106 may perform one or more of the steps included in process 300, for example, upon receiving a request from a user to register a domain name. One or more of the steps included in process 300 may likewise be performed by other components of system 100, e.g., by registrar 102, whois database 105, user device 103, one or more components of registry 101, and/or any combination thereof.

Alternatives generator 106 may determine a keyword input (block 310). The keyword input may include, e.g., a domain name, a term, a phrase, one or more keywords, etc. provided by a user. In some examples, the keyword input may be determined based on the access of a domain name from a storage, it may be received from a registrar, from user input at a registry, etc.

Alternatives generator 106 may decompose the determined keyword input into a plurality of n-grams (block 320). The decomposition may be performed, for example, by n-gram parser module 203, based on preferences that may be accessed, for example, at preferences 205. For example, where the preferences indicate n=3, the n-gram parser may parse the input into a plurality of trigrams.

A set of combinations may be generated utilizing at least two generated n-grams (block 330). The set of combinations may be generated by, for example, combinations module 204. The set of combinations may be generated, for example, based on preferences. The preferences may include, in some examples, a maximum length of a combination such that all combinations in the set of combinations are less than or equal to a maximum length of a combination and/or are greater than or equal to a minimum length.

For each of the combinations in the set that are generated, pronounceability is determined. Pronounceability may be determined, for example, by pronounceability module 206. Pronounceability module 206 may determine whether pronounceability for each of the combinations in the set exceeds a predetermined threshold of pronounceability (block 340). Those combinations that exceed the predetermined threshold of pronounceability may remain in the set. Those combinations that do not exceed the predetermined threshold of pronounceability may be discarded from the set of combinations.

Pronounceability may be determined, for example, by determining a frequency of occurrence of each of the n-grams in words included in a reference data set 207, for example, a dictionary, etc. The pronounceability may be determined utilizing the determined frequency of occurrence of each of the n-grams in the reference data set 207.

Publishing module 211 may provide the set of combinations (block 350). For example, publishing module 211 may send the set of combinations to the user, registrar, a third party, etc., through a network port 213.

In some examples, the combinations that exceed the predetermined threshold of pronounceability may be scored to provide a strength ranking. The strength ranking may be an indicator of how strong the combination is to a user. The strength ranking may be based on one or more ranking criteria that may be set, for example, via an administrator, via a user at registrar 102, via the user at user device 103 through user application 104, set by default, etc. The ranking may include, for example, one or more of the following: phonetic closeness of the combination to the keyword input, the length of the combination, similarity of the combination to unrelated keyword inputs, etc. The strength ranking may be provided with the combinations, for example, to storage, to user application 104, to registrar 102, to a display at registry 101, etc.

In some examples, combination verification module 212 may determine whether each of the combinations in the set of combinations is available for registration. For example, combination verification module 212 may communicate with registrar 102 and/or whois database 105, DNS registry data 214, etc., to determine if combinations in the set of combinations have already been registered. If a combination in the set of combinations is already registered, it may be removed from the set of combinations that published by publishing module 211.

In some examples, the set of combinations may be published in a manner that enables selection of one or more of the combinations for registration. For example, if alternatives generator 106 determines that one or more keyword inputs is available for registration, alternatives generator 106 may notify the user of the availability and may facilitate registration of the keyword input as a domain name after having received the user's request to register one or more of the published combinations.

FIG. 4 is a flow diagram of a process 400 for providing combinations that exceed a predetermined threshold of pronounceability. Process 400 may be performed, for example, by alternatives generator 106. In this example, alternatives generator 106 may include a combinations access module (not shown) that is responsible for accessing a set of combinations, where each of the plurality of combinations may include two or more n-grams that were generated from a keyword input.

As shown in FIG. 4, combinations access module (not shown) may access a set of combinations including a plurality of, each of the plurality of combinations including at least two n-grams determined from an input (block 410). Each of the combinations may have been generated in accordance with the algorithms discussed above. The plurality of combinations may be accessed from a combinations storage (not shown) either locally or remotely within system environment 100.

For each of the combinations in the set that are generated, pronounceability is determined. Pronounceability may be determined, for example, by pronounceability module 206. Pronounceability module 206 may determine whether pronounceability for each of the combinations in the set exceeds a predetermined threshold of pronounceability (block 420). Those combinations that exceed the predetermined threshold of pronounceability may remain in the set. Those combinations that do not exceed the predetermined threshold of pronounceability may be discarded from the set of combinations.

Pronounceability may be determined, for example, by determining a frequency of occurrence of each of the n-grams in words included in a reference data set 207, for example, a dictionary, etc. The pronounceability may be determined utilizing the determined frequency of occurrence of each of the n-grams in the reference data set 207.

Publishing module 211 may provide the set of combinations that exceed the predetermined threshold of pronounceability (block 430). For example, publishing module 211 may send the set of combinations to the user, registrar, a third party, etc., through a network port 213.

In some examples, the combinations that exceed the predetermined threshold of pronounceability may be scored to provide a strength ranking. The strength ranking may be an indicator of how strong the combination is to a user. The strength ranking may be based on one or more ranking criteria that may be set, for example, via an administrator, via a user at registrar 102, via the user at user device 103 through user application 104, set by default, etc. The ranking may include, for example, one or more of the following: phonetic closeness of the combination to the keyword input, the length of the combination, similarity of the combination to unrelated keyword inputs, etc. The strength ranking may be provided with the combinations, for example, to storage, to user application 104, to registrar 102, to a display at registry 101, etc.

In some examples, combination verification module 212 may determine whether each of the combinations in the set of combinations is available for registration. For example, combination verification module 212 may communicate with registrar 102 and/or whois database 105, DNS registry data 214, etc., to determine if combinations in the set of combinations have already been registered. If a combination in the set of combinations is already registered, it may be removed from the set of combinations that published by publishing module 211.

In some examples, the set of combinations may be published in a manner that enables selection of one or more of the combinations for registration. For example, if alternatives generator 106 determines that one or more keyword inputs is available for registration as a domain name, alternatives generator 106 may notify the user of the availability and may facilitate registration of the domain name after having received the user's request to register one or more of the published combinations.

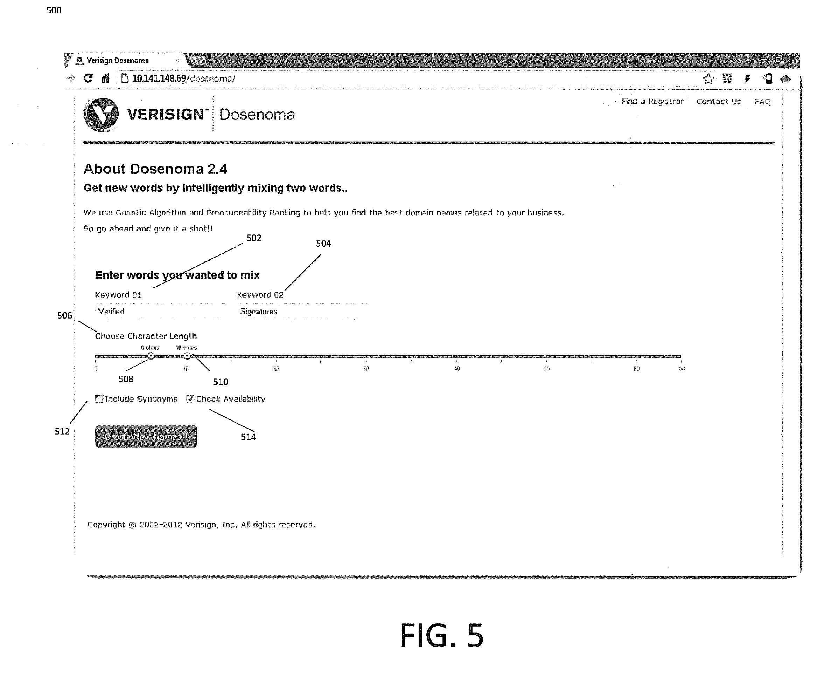

FIG. 5 is an example user interface 500 that may be displayed on a display device at registrar 102, user device 103, registry 101, or other devices within system 100. As shown in Fig. 5, value may be received into the user interface for alternative keyword inputs to be generated. Keyword fields 502 and 504 may receive keywords 1 and 2, respectively. Keywords 502 and 504 may, when concatenated, may be indicative of a keyword input a user is considering registering, is presenting for registration, etc. These keywords may be communicated to the alternatives generator 106 discussed herein. In addition, a minimum/maximum character length may be received via choose character length 506. Indicator 508 may be set to indicate a minimum character length of the combinations. Indicator 510 may be set to indicate a maximum character length. Include synonyms 512 includes a selectable checkbox that instructs the alternatives generator 106 to include alternatives for synonyms of the input. Check availability 514 includes a selectable checkbox that instructs the alternatives generator 106 to check whether the generated combinations are available for registration.

It may be appreciated that the mechanisms included in user interface 500 may be in a form that is different from that depicted in FIG. 5. For example, the user interface may include fields to receive data input, slideable scales, pull down menus, checkboxes, etc. in order to receive preferences that may be utilized by alternatives generator 106. Further, additional fields may be provided to enhance the functionality of alternatives generator 106. For example, additional mechanisms may be displayed to receive input related to a threshold of pronounceability, a pointer to a relevance data set in the form of, for example, a URL, an IP address, an name of a data set, the value of n for use with the n-gram parser module, etc. The values received via user interface 500 may be transmitted to, for example, preferences 205, 208, etc., and utilized by alternatives generator 106 as discussed herein.

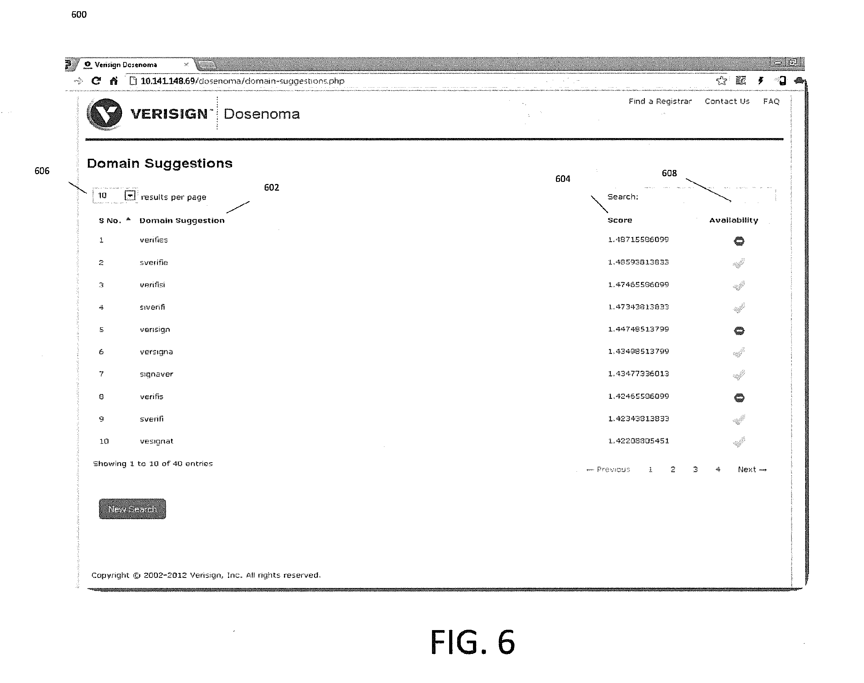

FIG. 6 is an example display 600 that may be displayed on a display device indicating the results of the alternatives generator 106 based on the input received in keywords 502 and 504. As shown in FIG. 6, domain suggestions 602 may include the combinations that were generated from the n-grams input in keywords 502 and 504. The combinations may have associated therewith a strength ranking score 604. The combinations may be ordered via score number 606 based on the strength ranking score. Availability 608 may indicate whether the combination is available for registration.

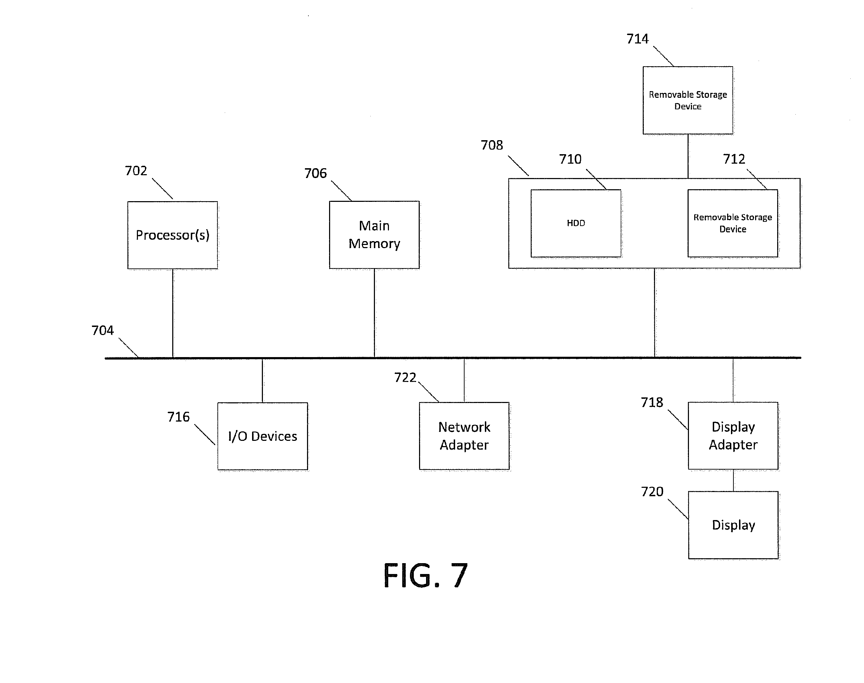

FIG. 7 illustrates a block diagram of a computing apparatus 700, such as the device 100 depicted in FIG. 1, according to an example. In this respect, the computing apparatus 700 may be used as a platform for executing one or more of the functions described hereinabove.

The computing apparatus 700 includes one or more processors 702. The processor(s) 702 may be used to execute some or all of the steps described in the methods depicted in Figs. 3-4. Commands and data from the processor(s) 702 are communicated over a communication bus 704. The computing apparatus 700 also includes a main memory 706, such as a random access memory (RAM), where the program code for the processor(s) 702, may be executed during runtime, and a secondary memory 708. The secondary memory 708 may include, for example, one or more hard disk drives 710 and/or a removable storage drive 712, representing a floppy diskette drive, a magnetic tape drive, a compact disk drive, etc., where a copy of the program code in the form of computer-readable or machine-readable instructions for the n-gram parser module, the combination module, the pronounceability module, the strength ranking module and the combination verification module to execute the methods depicted in Figs. 3-4 may be stored. The storage device(s) as discussed herein may comprise a combination of non-transitory, volatile or nonvolatile memory such as random access memory (RAM) or read only memory (ROM).

The removable storage drive 710 may read from and/or writes to a removable storage unit 714 in a well-known manner. User input and output devices 716 may include a keyboard, a mouse, a display, etc. A display adaptor 718 may interface with the communication bus 704 and the display 720 and may receive display data from the processor(s) 702 and convert the display data into display commands for the display 720. In addition, the processor(s) 702 may communicate over a network, for instance, the Internet, LAN, etc., through a network adaptor 722.

The foregoing descriptions have been presented for purposes of illustration and description. They are not exhaustive and do not limit the disclosed examples to the precise form disclosed. Modifications and variations are possible in light of the above teachings or may be acquired from practicing the disclosed examples. For example, the described implementation includes software, but the disclosed examples may be implemented as a combination of hardware and software or in firmware. Examples of hardware include computing or processing systems, including personal computers, servers, laptops, mainframes, micro-processors, and the like. Additionally, although disclosed aspects are described as being stored in a memory on a computer, one skilled in the art will appreciate that these aspects can also be stored on other types of computer-readable storage media, such as secondary storage devices, like hard disks, floppy disks, a CD-ROM, USB media, DVD, or other forms of RAM or ROM.

Computer programs based on the written description and disclosed methods are within the skill of an experienced developer. The various programs or program modules can be created using any of the techniques known to one skilled in the art or can be designed in connection with existing software. For example, program sections or program modules can be designed in or by means of .Net Framework, .Net Compact Framework (and related languages, such as Visual Basic, C, etc.), XML, Java, C++, JavaScript, HTML, HTML/AJAX, Flex, Silverlight, or any other now known or later created programming language. One or more of such software sections or modules can be integrated into a computer system or existing browser software.

Other examples will be apparent to those skilled in the art from consideration of the specification and practice of the examples disclosed herein. The recitations in the claims are to be interpreted broadly based on the language employed in the claims and not limited to examples described in the present specification or during the prosecution of the application, which examples are to be construed non-exclusive. It is intended, therefore, that the specification and examples be considered as example(s) only, with a true scope and spirit being indicated by the following claims and their full scope equivalents.

**Claims**

1. A computer-implemented method, comprising:

    determining (310) a keyword input;
    decomposing (320) the determined keyword input into a plurality of n-grams;
    generating (330) a plurality of combinations, each of the plurality of combinations including at least two of the plurality of n-grams;
    determining (340) whether each of the generated plurality of combinations exceed a predetermined threshold of pronounceability; and
    providing (350) the determined combinations that exceed the predetermined threshold of pronounceability.

2. The computer-implemented method of claim 1, wherein decomposing (320) the determined keyword inputs includes decomposing the determined keyword inputs into a plurality of trigrams.

**3.** The computer-implemented method of claim 1, wherein determining (340) whether the generated plurality of combinations exceeds a predetermined threshold of pronounceability includes:

for each n-gram, determining a frequency of occurrence of the n-gram in words included in a reference data set; and
determining the pronounceability of the n-gram based on the determined frequency of occurrence.

**4.** The computer-implemented method of claim 1, wherein generating (330) the plurality of combinations includes:

determining a maximum length or a minimum length of a combination; and
generating the plurality of combinations, each of the plurality of combinations including at least two of the plurality of n-grams, where the length of the combination is less than the determined maximum length or greater than the maximum length.

**5.** A computer-implemented method, comprising:

accessing (410) a plurality of combinations, each of the plurality of combinations including two n-grams determined from a keyword input;
determining (420) whether the accessed plurality of combinations exceed a predetermined threshold of pronounceability; and
providing (430) the determined combinations that exceed the predetermined threshold of pronounceability.

**6.** The computer-implemented method of claim 5, wherein the two n-grams are trigrams.

**7.** The computer-implemented method of claim 5, wherein determining whether the generated plurality of combinations exceeds a predetermined threshold of pronounceability includes:

for each n-gram, determining a frequency of occurrence of the n-gram in words included in a dictionary; and
determining the pronouceability of the n-gram based on the determined frequency of occurrence.

**8.** The computer-implemented method of claim 5, wherein accessing the plurality of combinations includes:

determining a maximum length or a minimum length of a combination; and
accessing the plurality of combinations, each of the plurality of combinations including two n-grams, where the length of the combination is less than the determined maximum length or greater than the minimum length.

**9.** A computer-implemented method, comprising:

receiving a keyword input, the keyword input including two words and an indication of a reference data set;
decomposing the received keyword input into a plurality of n-grams;
generating a plurality of combinations, each of the plurality of combinations including at least two of the plurality of n-grams;
determining whether each of the generated plurality of combinations exceed a predetermined threshold of pronounceability based on reference data in the reference data set; and
providing the determined combinations that exceed the predetermined threshold of pronounceability.

**10.** The computer-implemented method of claim 1 or claim 5 or claim 9, further comprising:

generating a strength ranking of each of the provided determined combinations; and
providing the generated strength ranking with each of the provided determined combinations.

**11.** The computer-implemented method of claim 10, wherein the strength ranking includes one of a phonetic closeness of the generated combination and the determined keyword input, a length of the combination, and a similarity of the generated combination with unrelated keyword inputs.

**12.** The computer-implemented method of claim 1 or claim 5 or claim 9, further comprising receiving a request to register one of the provided combinations.

**13.** The computer-implemented method of claim 12, further comprising determining whether the provided combinations are registered domain names.

100

REGISTRY 101

Alternatives
Generator 106

Reference Data Set
107

Registrar
102

Network
110

USER DEVICE
103

USER
APPLICATION
104

WHOIS
105

FIG. 1

106

```
┌──────────────────┐              ┌──────────────────┐
│  NETWORK PORT    │◄────────────►│   RECEIVER 201   │
│       202        │              │                  │
└──────────────────┘              └──────────────────┘
                                           ▲
                                           ▼
                                  ┌──────────────────┐
                                  │  N-GRAM PARSER   │
                                  │     MODULE       │◄───┐
                                  │       203        │    │
                                  └──────────────────┘    │
                                           ▲              │        ┌──────────────────┐
                                           ▼              ├───────►│  PREFERENCES 205 │
                                  ┌──────────────────┐    │        └──────────────────┘
                                  │   COMBINATIONS   │◄───┤
                                  │    MODULE 204    │    │
                                  └──────────────────┘    │
                                           ▲              │        ┌──────────────────┐
                                           ▼              ├───────►│ Reference Data Set│
                                  ┌──────────────────┐    │        │        107        │
                                  │  PRONOUNCEABILITY│    │        └──────────────────┘
                                  │     MODULE       │◄───┘
                                  │       206        │
                                  └──────────────────┘
                                           ▲
                                           ▼                       ┌──────────────────┐
                                  ┌──────────────────┐    ┌───────►│  PREFERENCES 208 │
                                  │ STRENGTH RANKING │    │        └──────────────────┘
                                  │     MODULE       │◄───┤
                                  │       210        │    │
                                  └──────────────────┘    │
                                           ▲              │        ┌──────────────────┐
                                           ▼              ├───────►│ DNS REGISTRY DATA │
                                  ┌──────────────────┐    │        │        214        │
                                  │   COMBINATION    │    │        └──────────────────┘
                                  │  VERIFICATION    │◄───┘
                                  │   MODULE 212     │
                                  └──────────────────┘
                                           ▲
                                           ▼
                                  ┌──────────────────┐
                                  │   PUBLISHING     │
                                  │    MODULE        │
                                  │      211         │
                                  └──────────────────┘
                                           ▲
                                           ▼
                                  ┌──────────────────┐
                                  │  NETWORK PORT    │
                                  │      213         │
                                  └──────────────────┘
```

# FIG. 2

DETERMINE
KEYWORD INPUT
310

DECOMPOSE
KEYWORD INPUT
INTO N-GRAMS
320

GENERATE
COMBINATIONS
USING N-GRAMS
330

DETERMINE
WHETHER
COMBINATIONS
EXCEED THRESHOLD
340

PROVIDE
COMBINATIONS
THAT EXCEED
THRESHOLD
350

FIG. 3

ACCESS
COMBINATIONS
410

DETERMINE
WHETHER
COMBINATIONS
EXCEED THRESHOLD
420

PROVIDE
COMBINATIONS
THAT EXCEED
THRESHOLD
430

FIG. 4

FIG. 5

EP 2 922 280 A1

600

Verisign Dosenoma

10.141.148.69/dosenoma/domain-suggestions.php

**VERISIGN** Dosenoma

Find a Registrar    Contact Us    FAQ

## Domain Suggestions

606    602    604    608

| 10 ▾ results per page | | |
|---|---|---|
| **S No. ^** **Domain Suggestion** | **Score** | **Availability** |
| 1    verifies | 1.48715586099 | ⬡ |
| 2    sverifie | 1.48593813833 | ✓ |
| 3    verifisi | 1.47465586099 | ✓ |
| 4    siverifi | 1.47343813833 | ✓ |
| 5    verisign | 1.44748513799 | ⬡ |
| 6    versigna | 1.43498513799 | ✓ |
| 7    signaver | 1.43477336013 | ✓ |
| 8    verifis | 1.42465586099 | ⬡ |
| 9    sverifi | 1.42343813833 | ✓ |
| 10   vesignat | 1.42208805451 | ✓ |

Search:

Showing 1 to 10 of 40 entries

← Previous    1    2    3    4    Next →

New Search

## FIG. 6

FIG. 7

Europäisches
Patentamt

European
Patent Office

Office européen
des brevets

## EUROPEAN SEARCH REPORT

Application Number

EP 15 15 9846

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEATHER CRAWFORD ET AL: "Kwyjibo: automatic domain name generation", SOFTWARE PRACTICE & EXPERIENCE, WILEY & SONS, BOGNOR REGIS, GB, vol. 38, no. 14, 25 November 2008 (2008-11-25), pages 1561-1567, XP007917717, ISSN: 0038-0644, DOI: 10.1002/SPE.885 [retrieved on 2008-04-09] * section 2 * | 1-13 | INV. H04L29/12 |
| X | US 2007/083369 A1 (MCCULLER PATRICK [US]) 12 April 2007 (2007-04-12) * paragraph [0034] - paragraph [0042] * | 1-13 | |
| A | Anonymous: "n-gram - Wikipedia, the free encyclopedia", , 30 November 2013 (2013-11-30), pages 1-6, XP055204914, Retrieved from the Internet: URL:https://en.wikipedia.org/w/index.php?title=N-gram&oldid=583934400 [retrieved on 2015-07-28] * page 1 * | 1-13 | **TECHNICAL FIELDS SEARCHED (IPC)** H04L |

The present search report has been drawn up for all claims

| Place of search | Date of completion of the search | Examiner |
|---|---|---|
| Berlin | 28 July 2015 | Böhmert, Jörg |

**ANNEX TO THE EUROPEAN SEARCH REPORT
ON EUROPEAN PATENT APPLICATION NO.**

EP 15 15 9846

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2015

| Patent document cited in search report | Publication date | Patent family member(s) | | Publication date |
|---|---|---|---|---|
| US 2007083369 A1 | 12-04-2007 | EP | 1932146 A2 | 18-06-2008 |
| | | JP | 5172682 B2 | 27-03-2013 |
| | | JP | 2009511959 A | 19-03-2009 |
| | | US | 2007083369 A1 | 12-04-2007 |
| | | WO | 2007044568 A2 | 19-04-2007 |

EPO FORM P0459

For more details about this annex : see Official Journal of the European Patent Office, No. 12/82